Europäisches Patentamt

(19) European Patent Office

Office européen des brevets

(11) **EP 0 885 505 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: 97915331.9

(22) Anmeldetag: **04.03.1997**

(51) Int Cl.⁷: **H04L 12/40**

(86) Internationale Anmeldenummer:
**PCT/DE97/00402**

(87) Internationale Veröffentlichungsnummer:
**WO 97/033407 (12.09.1997 Gazette 1997/39)**

(54) **VERFAHREN ZUR ÜBERTRAGUNG EINES DATENPAKETS IM ETHERNET VON EINER ERSTEN ANORDNUNG ZU MINDESTENS EINER ZWEITEN ANORDNUNG**

METHOD OF TRANSMITTING A DATA PACKET USING ETHERNET FROM A FIRST DEVICE TO AT LEAST ONE OTHER DEVICE

PROCEDE DE TRANSMISSION D'UN PAQUET DE DONNEES SUR ETHERNET ENTRE UN PREMIER DISPOSITIF ET AU MOINS UN DEUXIEME DISPOSITIF

(84) Benannte Vertragsstaaten:
**DE FR GB IT**

(30) Priorität: **08.03.1996 EP 96103699**
**08.03.1996 DE 19609080**

(43) Veröffentlichungstag der Anmeldung:
**23.12.1998 Patentblatt 1998/52**

(73) Patentinhaber: **SIEMENS AKTIENGESELLSCHAFT**
**80333 München (DE)**

(72) Erfinder:
• **BÖCKING, Stefan**
**D-81475 München (DE)**
• **BRAUN, Bodo**
**D-85635 Höhenkirchen-Siegertsbrunn (DE)**
• **HUTH, Hans-Peter**
**D-80638 München (DE)**

(56) Entgegenhaltungen:
**EP-A- 0 333 225      WO-A-95/18499**
**US-A- 5 319 641**

**Beschreibung**

Lokale Rechnernetze, die nach dem IEEE 802.3-Standard, der im folgenden als Ethernet-Standard bezeichnet wird, ausgestaltet sind, stellen eine Technologie dar, mit der Endgeräte über einen gemeinsam genutzten seriellen Bus verbunden werden. Der Zugriff auf diesen Bus wird durch das sog. Carrier Sense Multiple Access / Collision Detection (CSMA/CD) geregelt. Das Ethernet-Protokoll ist ein sog. faires Protokoll, d. h. alle an einem Bus angeschlossenen Endgeräte haben bei konkurrierendem Zugriff im statistische Mittel die gleiche Chance, ihre zu übertragenden Daten über den Bus zu übertragen, ungeachtet der Art der zu übertragenden Daten.

In vielen Fällen ist es jedoch erforderlich, gewisse Datenströme gegenüber anderen zu bevorzugen. Beispiele sind hierfür Datenströme mit Echtzeit-Anforderungen, beispielsweise ein Ton-Datenstrom oder ein Videodatenstrom, aber auch Alarmmeldungen zur Steuerung von Maschinen. Derartige Datenströme benötigen eine gewisse Mindestqualität bei der Übertragung. Garantien für solche Mindestqualitäten werden jedoch bei dem Ethernet-Protokoll derzeit nicht gewährleistet, da bei dem CSMA/CD-Protokoll keine Unterscheidung der Datenströme und deshalb auch keine unterschiedliche Behandlung der Datenströme möglich ist.

Der Ethernet-Bus ist ein passives Übertragungsmedium, die Vermittlungsleistung ist verteilt in den Endgeräten, die ebenfalls nach dem Ethernet-Protokoll arbeiten, realisiert. Das sog. Switched Ethernet ist eine Technologie, bei der lokale Netze nach dem IEEE 802.3-Standard durch eine Paketvermittlung anstelle des sonst üblichen Ethernet-Bus gekoppelt werden. Die Paketvermittlung wird durch den sog. Ethernet-Knoten realisiert. Ein Ethernet-Knoten weist mehrere bidirektionale Zugänge auf, die sog. Ports. Der Ethernet-Knoten muß eingehende Datenpakete durch mindestens einen Ausgangsport weiterleiten, der mit dem Ziel bzw. den Zielen des Datenpakets direkt oder indirekt gekoppelt ist. Treffen unterschiedliche Eingangspakete ein, welche über denselben Ausgangsport ausgegeben werden müssen, so werden die Pakete zwischengespeichert. Der dazu verwendete Pufferspeicher kann in Hochlastfällen überlaufen, neu eintreffende Datenpakete gehen in diesem Fall verloren.

Um Überläufe in Pufferspeichern in Vermittlungseinheiten zu vermeiden wird im Rahmen der Ethernet-Verfahren das sog. Back-Pressure Verfahren eingesetzt. Dieses Verfahren wird z.B. in der WO 95/18499 und in der EP-A-0 333 225 beschrieben. Bei dem Back-Pressure Verfahren wird an demjenigen Port, an dem ein Datenpaket bei der jeweiligen Vermittlungseinheit eintrifft, eine künstliche Kollision von Datenpaketen erzeugt, falls der entsprechende Pufferspeicher, in dem das Datenpaket gespeichert werden soll, schon voll ist. Die Anordnung, die dieses Datenpaket gesendet hat, bricht daraufhin das Senden des Datenpakets ab und wiederholt den Sendeversuch erst nach einer zufällig gewählten Zeitspanne. Dadurch gehen zwar keine Daten verloren, die Laufzeiten für die Datenpakete steigen jedoch um den Betrag der Zeit bis zum ersten erfolgreichen Sendeversuch, und zwar nicht nur für die Daten der Verbindungen, welche durch den vollen Puferspeicher müssen, sondern für alle Datenapkete des "abgebremsten" Senders, unabhängig davon, welches Ziel diese Datenpakete haben.

Bei Daten mit Echtzeit-Anforderungen, z. B. Videodaten oder Tondaten, sind zu lange Verzögerungen der Übertragung der Datenpakete nicht akzeptabel. Datenquellen mit solchen Anforderungen müssen vor unerwünschten Kollisionen geschützt werden, wobei in diesem Fall u. U. Verluste von Datenpaketen durch einen Überlauf des Pufferspeichers eher zu akzeptieren sind als ein Abbremsen des gesamten Netzwerkinterfaces.

Aus dem Dokument [1] sind verschiedene Paketformate des Ethernet-Protokolls bekannt.

Der Erfindung liegt das Problem zugrunde, ein mit dem Ethernet-Standard konformes Verfahren anzugeben, mit dem unerwünschte künstliche Kollisionen von Datenpaketen reduziert werden.

Das Problem wird durch das Verfahren gemäß Patentanspruch 1 gelöst.

Bei dem Verfahren gemäß Patentanspruch 1 wird für den Fall, daß ein Pufferspeicher (PS) in einer Vermittlungsanordnung oder mindestens ein Teil des Pufferspeichers (PS) in der Vermittlungsanordnung nur in dem Fall eine künstliche Kollision erzeugt wird, wenn das Datenpaket (DP) eine Angabe enthält, daß für die das Datenpaket (DP) sendende Anordnung die Erzeugung einer künstlichen Kollision zulässig ist.

Mit diesem Verfahren wird eine Auswahl für die Anordnungen getroffen, die eine künstliche Kollision eines gesendeten Datenpakets verarbeiten können. Somit ist es möglich, abhängig von den Anwendungen auf den Datenquellen, die Qualität der Verbindungen der jeweiligen Datenquelle bezüglich der Verzögerung der Übertragung der Datenpakete zu optimieren.

Vorteilhafte Weiterbildungen der Erfindung ergeben sich aus den abhängigen Ansprüchen.

In einer Weiterbildung des Verfahrens ist es vorteilhaft, jedem von einer ersten Anordnung zu übertragenden Datenpaket eine Prioritätsklasse zuzuordnen und das Datenpaket entsprechend der Prioritätsklasse zu kennzeichnen. Anschließend wird das Datenpaket unter Berücksichtigung der Prioritätsklasse zu einer zweiten Anordnung übertragen.

Ein erheblicher Vorteil dieser Weiterbildung ist v. a. darin zu sehen, daß eine Priorisierung der Datenpakete, beispielsweise nach der Art des zu übertragenden Datenstroms möglich wird. Auf diese Weise kann für Datenpakete, welche eine höhere Priorität aufgrund Qualitätsanforderungen bezüglich Echtzeit-Anforderungen bei der Übertragung benötigen, im statistischen Mittel die geforderte Qualität gewährleistet werden.

Der Ausdruck "im statistischen Mittel" ist in diesem Zusammenhang in der Weise zu verstehen, daß eine Gewährleistung der Qualitätsanforderungen mit einer gewissen Wahrscheinlichkeit entsprechend der verwendeten Prioriätsklasse gegeben werden kann. Die Ursache hierfür ist darin zu sehen, daß die Datenpakete entsprechend ihrer Priorität beispielsweise Datenpakete höherer Priorität gegenüber Datenpakete minderer Priorität bevorzugt übertragen werden.

Um eine mehrstufige Kommunikationsverbindung, d. h. eine Kommunikationsverbindung über mehrere Ethernet-Vermittlungsknoten, realisieren zu können, ist es in einer Weiterbildung des Verfahrens vorteilhaft, daß das Datenpaket von einer zweiten Anordnung empfangen wird, die dem Datenpaket zugeordnete Prioritätsklasse ermittelt wird und bei dem wiederum das Datenpaket unter Berücksichtigung der Prioritätsklasse weiter übertragen wird.

Durch diese Vorgehensweise wird eine Vereinfachung des Verfahrens erreicht, da nicht in jedem Vermittlungsknoten wiederum eine gänzliche neue Prioritätsklasse für das Datenpaket gebildet und dem Datenpaket zugeordnet werden muß, sondern es wird lediglich die dem Datenpaket zuvor zugeordnete Prioritätsklasse ermittelt und die Prioritätsklasse wird im weiteren Verfahren weiter verwendet.

Zur Zuordnung der Prioritätsklasse zu dem Datenpaket ist es vorteilhaft, in dem der sog. Ethernet-Schicht zugeführten Datenpaket enthaltene Information über die Art des Datenpaket und somit über die Art der Kommunikationsverbindung oder auch über die Art des Datenstroms zu analysieren und bei der Zuordnung der Prioritätsklasse die analysierte Information zu. berücksichtigen. Auf diese Weise wird es automatisch möglich, die Art des Datenpakets und somit die geforderten Qualitätsbedürfnisse des Datenstroms zu analysieren und zu gewährleisten.

Ferner ist es in einer Weiterbildung des Verfahrens vorteilhaft, für das Datenpaket eine Zugangskontrolle durchzuführen, wodurch einer Überlastung der Anordnung, mit der das Verfahren durchgeführt wird, durch zu viele zu übertragende Datenpakete vorgebeugt werden kann.

Ferner ist es in einer Weiterbildung des Verfahrens vorteilhaft, einen Pufferspeicher der Anordnung in mehrere Teile aufzuteilen und jeden Teil des Pufferspeichers jeweils mindestens einer Prioritätsklasse zuzuordnen. Dies bedeutet, daß jeweils in dem entsprechenden Teil des Pufferspeichers nur Datenpakete der entsprechenden Prioritätsklasse gespeichert werden können.

Die oben beschriebene Weiterbildung wird dadurch noch weiter verbessert, daß die Datenpakete aus den entsprechenden Teilen des Pufferspeichers in einer vorgebbaren Reihenfolge ausgelesen und übertragen werden. Die Reihenfolge kann nach einem beliebigen Scheduling-Verfahren vorgegeben werden.

Ferner ist es in einer Weiterbildung vorteilhaft, für Datenpakete, die einer vorgebbaren Kommunikationsverbindung zugeordnet werden, in einer Verbindungsaufbauphase ausgehandelte, während der Kommunikationsverbindung benötigte Betriebsmittel während der gesamten Kommunikationsverbindung zu reservieren. Auf diese Weise können erheblich sichere Gewährleistungen für die Qualitätsanforderung der zu übertragenden Datenpakete erfüllt werden.

In den Figuren sind Ausführungsbeispiele der Erfindung dargestellt, die im weiteren näher erläutert werden.

Es zeigen

Fig. 1         eine Skizze von Anordnungen einer Kommunikationsverbindung mit zwei Endgeräten und einer Vermittlungseinheit, die gemäß dem Ethernet-Protokoll Datenpakete austauschen;

Fig. 2         ein Ablaufdiagramm, in dem Weiterbildungen des Verfahrens dargestellt sind;

Fig. 3a bis 3f     eine Skizze, in der verschiedene Protokollformate des Ethernet-Standards und damit verbundene verschiedene Möglichkeiten zur Kennzeichnung eines Datenpakets dargestellt sind;

Fig. 4         eine Skizze der Anordnung, mit einigen Weiterbildungen und detaillierten Darstellungen, mit denen das Zusammenwirken mit weiteren Kommunikationsschichten beschrieben wird;

Fig. 5a bis 5f    verschiedene Protokollformate und damit verbundene Möglichkeiten, ein im weiteren beschriebenes Back-Pressure-Verfahren unter Beibehaltung des Ethernet-Standards zu realisieren;

Fig. 6         ein Nachrichtenflußdiagramm, in dem beispielhaft eine Signalisierung und der Datenaustausch der in Figur 1 dargestellten Anordnungen beschrieben ist;

Fig. 7         ein Skizze, in der eine zeitliche Aufteilung der Bandbreite der Kommunikationsverbindung in mehrere Zeitintervalle für verschiedene Prioritätsklassen dargestellt ist.

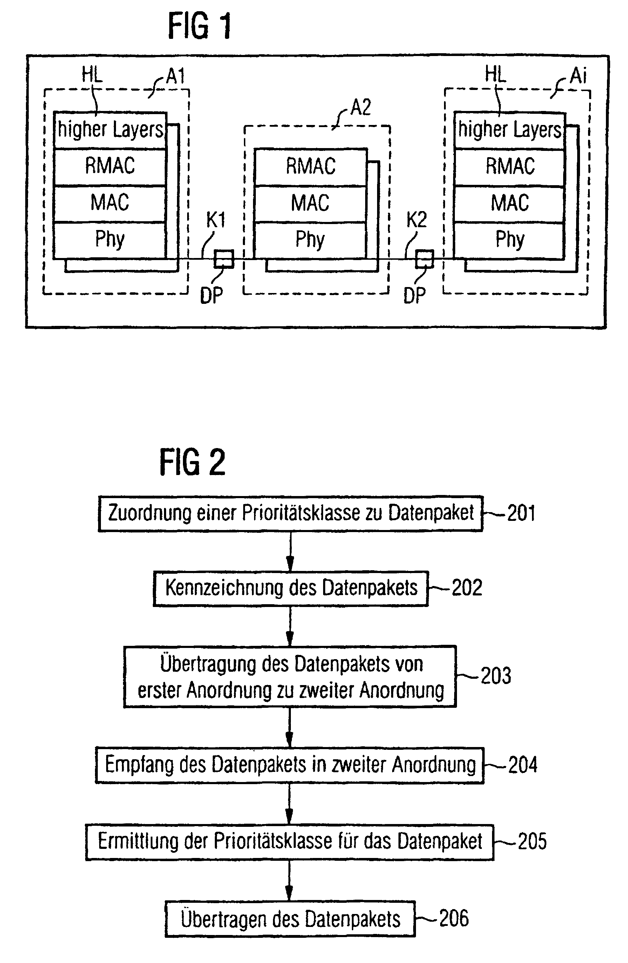

In Fig. 1 sind Anordnungen einer beispielhaft dargestellten Kommunikationsverbindung, bei der gemäß dem Ethernet-Standard eine Übertragung von Datenpaketen erfolgt, dargestellt.

Es ist eine erste Anordnung A1, eine zweite Anordnung A2, sowie weitere Anordnungen Ai dargestellt.

In diesem Beispielfall ist die erste Anordnung A1 als ein Ethernet-Endgerät ausgestaltet. Die zweite Anordnung A2 ist als ein Vermittlungselement, als sog. Ethernet-Vermittlungsknoten (Ethernet-Switch) ausgestaltet. Eine weitere Anordnung Ai ist in diesem Beispielfall wiederum als ein Ethernet-Endgerät ausgestaltet. Mit einem ersten Index i wird jede weitere Anordnung Ai eindeutig gekennzeichnet, wobei der erste Index i eine beliebige natürliche Zahl ist.

Zwischen den Anordnungen A1, A2, Ai besteht eine Punkt-zu-Punkt Verbindung, zwischen der ersten Anordnung A1 und der zweiten Anordnung A2 durch eine erste Kopplung K1 und zwischen der zweiten Anordnung A2 und der weiteren Anordnung Ai eine zweite Kopplung K2.

Es ist jedoch ebenso möglich, daß im sogenannten Shared Ethernet als Ethernet-Endgeräte ausgestaltete Anordnungen direkt miteinander gekoppelt sind, und nicht wie im sogenannten Switched Ethernet durch mindestens eine als Vermittlungselement ausgestaltete Anordnung getrennt sind.

Da sich der Ethernet-Standard an dem sog. Schichtenmodell der International Standardisation Organisation (ISO) orientiert, werden die Anordnungen in der Prinzipdarstellung in Form von Kommunikationsschichten beschrieben. Die Kopplungen K1, K2 bilden das physikalische Medium, gemeinsam mit der sog. physikalischen Schicht PHY, die auch als Bitübertragungsschicht bezeichnet wird. Mit der Bitübertragungschicht ist die Ethernet-Schicht, beispielsweise die Schicht der Media-Access-Control (MAC-Schicht) gekoppelt. In der Ethernet-Schicht wird das standardisierte Ethernet-Protokoll durchgeführt. Die erfindungsgemäße Erweiterung des Ethernet-Protokolls kann logisch als eine Zwischenschicht zwischen der MAC-Schicht und weiteren, höheren Kommunikationsschichten betrachtet werden.

Aus diesem Grunde ist in der Fig. 1 das Verfahren als eine selbständige Schicht RMAC (Real Time Media-Access-Control) dargestellt.

Die im weiteren als Zwischenschicht RMAC bezeichnete selbständige Schicht RMAC ist zum einen mit der MAC-Schicht gekoppelt und und zum anderen mit weiteren Kommunikationsschichten. Unter weiteren Kommunikationsschichten sind beliebige, bekannte Transportprotokolle zu verstehen, beispielsweise TCP/IP (Transport Control Protocol/Internet Protocol) oder UDP/IP (User Datagramm Protocol/Internet Protocol) oder IPX, usw.. Die Gesamtheit aller logisch oberhalb der Zwischenschicht RMAC angeordneten Kommunikationsschichten werden in Fig. 1 vereinfachend als höhere Schichten HL bezeichnet. Der generelle Aufbau der Anordnungen bezüglich der höheren Schichten HL sowie der Bitübertragungsschicht PHY und der MAC-Schicht ist im Rahmen des jeweils verwendeten Protokolls beliebig. Da die zweite Anordnung in diesem Beispielsfall als Ethernet-Switch ausgestaltet ist, weist die zweite Anordnung in diesem Fall keine höheren Schichten HL auf. Dies ist gemäß dem Ethernet-Standard nicht erforderlich.

Auch wenn in Fig. 1 lediglich drei Anordnungen dargestellt sind, kann sich eine Kommunikationsverbindung, in der das Verfahren durchgeführt wird, über eine beliebige Anzahl von Anordnungen erstrecken, da das Ethernet-Protokoll sich lediglich auf eine Verbindung direkt miteinander gekoppelter Anordnungen bezieht.

### Erzeugung von künstlichen Kollisionen (Back-Pressure Verfahren)

Bei dem Etehrnet Standard ist es vorgesehen in einer als Ethernet-Switch ausgestalteten Anordnung, für den Fall, daß der Pufferspeicher PS oder auch ein Teil des Pufferspeichers PS vollgeschrieben ist und ein Datenpaket DP in den Pufferspeicher PS oder in den gefüllten Teil des Pufferspeichers PS eingeschrieben werden soll, eine sog. künstliche Kollision für das einzuschreibende Datenpaket DP zu erzeugen, wodurch dem Sender direkt mitgeteilt wird, daß das Datenpaket DP zu dem jeweiligen Zeitpunkt nicht verarbeitet werden kann.

Der Sender des Datenpakets DP bricht daraufhin das Senden des Datenpakets DP ab und erst nach einer zufällig gewählten Zeitspanne wird der Sendeversuch des Datenpakets DP wiederholt. Auf diese Weise wird verhindert, daß Datenpakete DP verloren gehen, da der Sender des Datenpakets DP das Datenpaket DP ein weiteres Mal vollständig sendet.

Bei dieser Vorgehensweise steigen die Laufzeiten für das Datenpaket DP um den Betrag der Zeit bis zu dem ersten erfolgreichen Sendeversuch des Datenpakets DP, und zwar nicht nur für die Daten der Kommunikationsverbindungen, welche durch den gefüllten Pufferspeicher PS müssen, sondern für alle Datenpakete DP des abgebremsten, d. h. "blockierten" Senders, unabhängig davon, welches Ziel diese Datenpakete DP haben oder welche Kommunikationsverbindung diese Datenpakete DP angehören.

Bei zu übertragenden Daten mit beispielsweise Echtzeit-Anforderungen sind, wie oben beschrieben wurde, zu lange Verzögerungen unter Umständen nicht akzeptabel. Es ist aus diesem Grunde vorteilhaft, Sender mit solchen Anforderungen vor künstlich erzeugten, unerwünschten Kollisionen der Datenpakete DP zu schützen, da es oftmals akzeptabler ist, bei diesen Arten von Datenströmen Paketverluste hinzunehmen, die durch den Überlauf des Pufferspeichers PS und/oder des Teils des Pufferspeichers PS verursacht werden, zu akzeptieren als eine Blockierung der gesamten Netzschnittstelle des Senders.

Dieses Problem wird erfindungsgemäß dadurch gelöst, daß Endgeräten spezifisch und dynamisch die Verwendung der Erzeugung künstlicher Kollisionen, welches im weiteren als Backpressure bezeichnet wird, erlaubt oder verboten wird.

Zu diesem Zweck wird eine automatische Zuordnung der Angabe, ob das Back Pressure-Verfahren für das jeweilige über die MAC-Adresse identifizierte Endgerät erlaubt ist oder nicht, realisiert. Dafür ist es erforderlich, daß der Empfänger, der z. B. als Ethernet-Switch ausgestaltet ist, des Datenpakets. DP erkennen kann, ob der Sender des Datenpakets DP für ein Back Pressure-Verfahren zugelassen ist oder nicht.

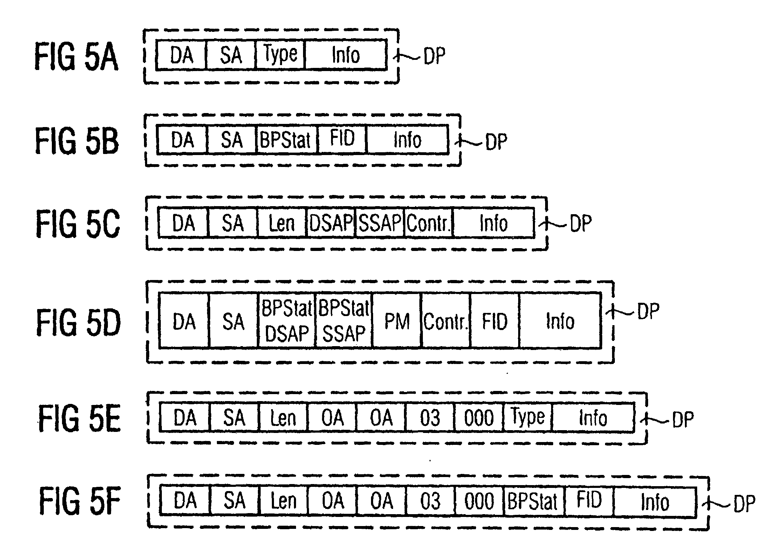

Diese Information kann beispielsweise in dem Paketformat, welches in den Figuren 5a bis 5f dargestellt ist, enthalten sein und/oder in einer Tabelle in dem Empfänger des Datenpakets DP jeweils endgerätespezifisch eingetragen sein.

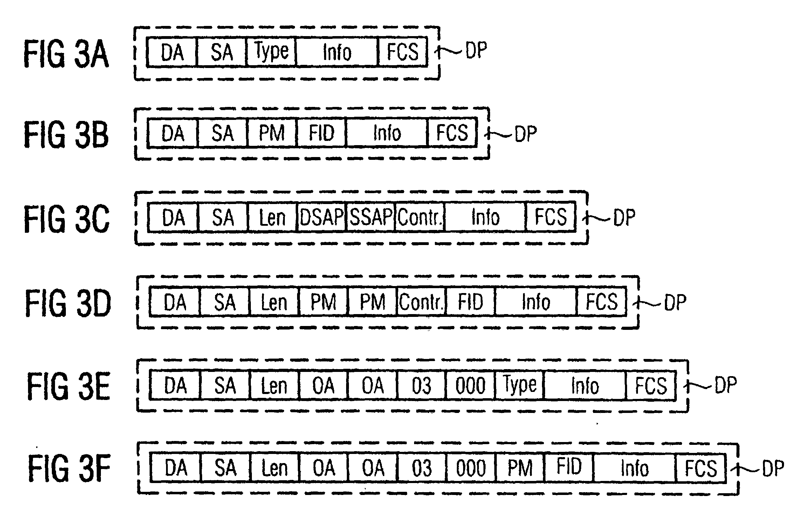

In den Fig. 5a, 5c und 5e sind die in den Fig. 3a, 3c und 3e dargstellten Paketformate für ein Ethernet-Datenpaket DP dargestellt.

Ein übliches Ethernet-Datenpaket DP weist z. B. folgende, im Ethernet-Standard ausgewiesenen Felder in dem Datenpaket DP auf (vgl. Figur 3a):

- ein Zieladreßfeld DA, in dem die Adresse des Empfängers des Datenpakets DP angegeben ist;
- ein Senderadreßfeld SA, in dem die Adresse des Senders des Datenpakets DP angegeben ist;
- ein Feld Type, welches von dem Empfänger des Datenpakets DP als ganze Zahl interpretiert wird und üblicherweise die Länge von zwei Oktetten aufweist. Das Feld Type wird je nach Zahl, die in dem Feld steht, unterschiedlich interpretiert. Ist die Zahl kleiner als 1500, so wird das Feld Type z. B. als Längenfeld interpretiert und das restliche Datenpaket DP entspricht dem üblichen sog. Logic-Link-Control-Format (LLC-Format). Ist die Zahl in dem Feld Type jedoch nicht kleiner als 1500, so wird die Zahl als Typangabe interpretiert. Die Typangabe enthält einen Code für das Netzwerkprotokoll, das die nach-folgende, in dem Datenpaket DP enthaltene Information generiert hat.

In dem sog. LLC-Format wird das Netzwerkprotokoll durch den sog. Dienstzugangspunkt (Service-Access-Point, SAP), den LLC-Service-Access-Point (LLC SAP) definiert. Ein Beispiel eines solchen Paketformats ist in Fig. 3c dargestellt. In Fig. 3e ist eine Variante des LLC-Formats, das sog. LLC-Subnet-Attachment-Point-Format (SNAP) dargestellt, bei dem der Service-Access-Point (SAP) fest auf den Wert hexadezimal 0A gesetzt wird. Das Netzwerkprotokoll ist bei dieser Variante in einem separaten Feld Type (vgl. Figur 3e) codiert.

Ferner weisen alle Protokollelemente ein Informationsfeld Info auf, in dem die eigentliche, von höheren Schichten HL zugeführten zu übertragenden Informationen in dem Datenpaket DP enthalten sind.

Auch ist ein Fehlererkennungsfeld FCS mit einem Prüfsummencode in den Protokollformaten vorgesehen.

Es ist bei diesem Verfahren beispielsweise in dem Feld Type eine Statusangabe BPSTAT vorgesehen, mit der angegeben wird, ob für den Sender des Datenpakets DP das Back Pressure-Verfahren zugelassen ist oder nicht.

Ebenso ist in einer Weiterbildung des Verfahrens ein Flußidentifikatorfeld FID vorgesehen (vgl. Fig. 5b, 5e, 5f). Auch wenn in diesem Ausführungsbeispiel dieselben Felder verwendet wurden, wie dies für die Prioritätsklassen PKi beschrieben wurde, so ist es jedoch ebenso in einer Variante vorgesehen, weitere Felder in dem Protokollformat vorzusehen, um somit beide Informationen in einem Datenpaket DP übertragen zu können.

Auf diese Weise wird es möglich, abhängig von den Anwendungen auf den Datenquellen, die Qualität der Verbindungen der jeweiligen Datenquelle bezüglich der Verzögerung der Übertragung der Datenpakete zu optimieren.

Das standardisierte Ethernet-Protokoll weist ferner v. a. den Nachteil auf, daß durch den freien Zugriff aller an dem Ethernet-Bus angeschlossenen Geräte gem. dem CSMA/CD-Protokoll ein freier Zugriff für alle zu übertragenden Datenpakete DP möglich ist, ungeachtet der Art der zu übertragenden Daten.

Dies führt dazu, daß für Datenströme, die vorgebbare Echtzeit-Anforderungen an die Übertragung der Datenpakete DP der entsprechenden Kommunikationsverbindung stellen, nicht gewährleistet werden können.

Die verschiedenen Echtzeit-Anforderungen werden im weiteren als Qualitätsmerkmale bezeichnet. Unter Qualitätsmerkmalen sind im Rahmen dieses Dokumentes beispielsweise folgende Kriterien zu verstehen:

- Laufzeiten der Datenpakete DP,
- Laufzeitschwankungen der Datenpakete DP,
- Verluste der Datenpakete DP bei Überlast der Kommunikationsverbindung bzw. der Anordnungen,
- Nutzdatenraten, usw.

Um bestimmte Qualitätsmerkmale, die völlig applikationsspezifisch sind und applikationsspezifisch frei vorgebbar sind, gewährleisten zu können, weist das Verfahren in einer vorteilhaften Weiterbildung folgende Verfahrensschritte auf, die in Fig. 2 dargestellt sind.

Das zu übertragende Datenpaket DP wird von einer höheren Schicht HL der Zwischenschicht RMAC zugeführt. Zur Übertragung des Datenpakets DP im Ethernet sind folgende Verfahrensschritte vorgesehen.

Dem Datenpaket DP wird in einem ersten Schritt 201 eine Prioritätsklasse PKj aus einer Menge einer beliebigen Anzahl von Prioritätsklassen PKj zugeordnet. Mit dem zweiten Index j wird jede Prioritätsklasse PKj eindeutig gekennzeichnet, wobei der zweite Index j eine beliebige natürliche Zahl ist.

Das Datenpaket DP wird in einem weiteren Schritt 202 entsprechend der Prioritätsklasse PKj eindeutig markiert.

In einem letzten Schritt 203 wird das Datenpaket DP von der ersten Anordnung A1, in der das Verfahren durchgeführt wird, zu der zweiten Anordnung A2 übertragen.

In einer Weiterbildung des Verfahrens sind weitere Verfahrensschritte vorgesehen, die ebenso in Fig. 2 dargestellt sind.

Das Datenpaket DP wird in einem weiteren Verfahrensschritt 204 von der zweiten Anordnung A2 empfangen.

Anschließend wird in der zweiten Anordnung A2 die Prioritätsklasse PKj, die dem Dätenpaket DP in der ersten Anordnung A1 zugeordnet wurde, ermittelt 205.

Unter Berücksichtigung der ermittelten Prioritätsklasse PKj wird das Datenpaket DP weiter übertragen 206, in diesem Beispielsfall, der in Fig. 1 dargestellt ist, zu der weiteren Anordnung Ai.

Im weiteren werden die einzelnen Verfahrensschritte dieser Weiterbildung in einer möglichen Ausgestaltung näher erläutert.

**Zuordnung der Prioritätsklasse PKJ zu dem Datenpaket DP 201**

Allgemein bedeutet die Zuordnung der Prioritätklasse PKj zu dem Datenpaket DP eine Abbildung der möglicherweise großen Anzahl benötigter Qualitätsmerkmale auf die Prioritätsklasse PKj, durch die die entsprechende Kombination der erforderlichen Qualitätsmerkmale gewährleistet wird.

Auch wenn die Anzahl und Eigenschaften der Qualitätsmerkmale beliebig ist, hat es sich als vorteilhaft herausgestellt, folgende Quality of Service- Parameter (QOS-Parameter) zur Gewährleistung der Qualitätsmerkmale in dem Verfahren zu berücksichtigen. Es hat sich als ausreichend herausgestellt, daß folgende vier Prioritätsklassen Pkj (j=0, 1, 2, 3) im Rahmen dieses Verfahrens berücksichtigt werden.

Eine erste Prioritätsklasse PK0 ist vorgesehen für eine verbindungslose Kommunikationsverbindung, bei der lediglich gewährleistet wird, daß mit einer unspezifizierten Bitrate nach besten Möglichkeiten abhängig von der Auslastung des Kommunikationsnetzes ohne jegliche Gewährleistung und ohne Verbindungsaufbau das jeweilige Datenpaket DP übertragen wird. Somit entspricht die erste Prioritätsklasse PK0 der niedrigsten Priorität, die dem Datenpaket DP zugeordnet werden kann.

Eine zweite Prioritätsklasse PK1 ist für eine verbindungsorientierte Kommunikationsverbindung vorgesehen, bei der eine kontrollierte Verzögerung, d. h. eine maximale Verzögerung der Übertragung des Datenpakets DP statistische gewährleistet wird. Bei dem Dienst der sog. kontrollierten Verzögerung werden beispielsweise folgende Dienstmerkmale realisiert:

- es wird eine für die Verbindung benötigte Bandbreite, die in einem im weiteren beschriebenen Verbindungsaufbau ausgehandelt wird, gewährleistet;
- die durchschnittlichen Verzögerungen bei der Übertragung des Datenpaketes DP bei großer Belastung des Kommunikationsnetzes sind keinesfalls schlechter als die Verzögerungen der Datenpakete DP, denen die erste Prioritätsklasse PK0 zugeordnet wurde;
- die max. Verspätung bei der Übertragung des Datenpakes DP bei großer Last des Kommunikationsnetzes sind erheblich geringer als die von Datenpaketen DP der ersten Prioritätsklasse PK0;
- die Verlustrate der Datenpakete DP aufgrund von Überläufen des Pufferspeichers PS der Anordnungen A1, A2, Ai sind nicht erheblich, solange sich die Eigenschaften des Datenstroms, also der ausgehandelten Kommunikationsverbindung an den in der Verbindundgsaufbauphase ausgehandelten "Verkehrsvertrag" für die jeweilige Kommunikationsverbindung hält.

Mit der zweiten Prioritätsklasse PK1 wird somit ein Dienst realisiert, mit dem ein Bandbreitenbedarf mit schwacher, bzw. mit keinen Echtzeit-Anforderungen gewährleistet wird. Die zweite Prioritätsklasse PK1 eignet sich z. B. für bursthaften Verkehr mit Bedarf einer Kommunikationsverbindung für eine bestimmte Bandbreite.

Eine dritte Prioritätsklasse PK2 bezieht sich auf eine verbindungsorientierte Kommunikationsverbindung. Für Datenpakete DP, denen die dritte Prioritätsklasse PK2 zugeordnet wurde, werden beispielsweise folgende Dienste vorgesehen:

- die meisten Datenpakete DP werden tatsächlich vollständig übertragen;
- in den meisten Fällen wird die Verspätung der Datenpakete DP bei der Übertragung nicht eine vorgebbare maximale Verzögerungszeit für die Übertragung der Datenpakte DP überschreiten.

In diesem Zusammenhang ist der Ausdruck "meisten Datenpakete" in einer Weise zu verstehen, daß dies eine vorgebbare, in der Verbindungsaufbauphase beispielsweise anzugebende Zahl ist. Es ist beispielsweise in vielen Fällen ausreichend, daß eines von 1.000 übertragenen Datenpaketen DP innerhalb einer Sekunde und maximal eines von 10.000 Datenpaketen DP in noch längeren Zeitintervallen die durch den Wert der für die "meisten Datenpakete" angegebene Grenze überschritten wird. Somit wird durch die dritte Prioritätsklasse PK2 ein Dienst gewährleistet, bei dem eine kontrollierte Verzögerung zzgl. einer maximalen Verzögerungsgrenze gewährleistet wird, womit ein "Fast-Echtzeit"-Dienst realisiert wird.

Eine vierte Prioritätsklasse PK3 ist ebenso für eine verbindungsorientierte Kommunikationsverbindung vorgesehen. Bei der vierten Prioritätsklasse PK3, die der höchsten Priorität entspricht, die dem Datenpaket DP zugewiesen werden kann, werden beispielsweise folgende Dienste gewährleistet:

- die beispielsweise während des Verbindungsaufbaus ausgehandelte benötigte Bandbreite für die Kommunikationsverbindung wird zur Verfügung gestellt;
- vorgebbare maximale Verspätungszeiten für das Datenpaket DP bei der Übertragung werden garantiert;
- es treten keine Verluste von Datenpaketen DP aufgrund von Überläufen des Pufferspeichers PS auf.

Somit werden die bei dem Verbindungsaufbau ausgehandelten Parameter der Kommunikationsverbindung in der vierten Prioritätsklasse PK3 mit einer sehr viel höheren statistischen Sicherheit als bei den anderen Prioritätsklassen PK0, PK1, PK2 gewährleistet, solange nicht das gesamte Kommunikationsnetz zusammenbricht, z. B. aufgrund eines Fehlers in dem Kommunikationsnetz.

**Kennzeichnung des Datenpakets DP entsprechend der zugeordneten Prioritätsklasse PKi 202.**

Die Art und Weise, wie das Datenpaket DP markiert wird, so daß der Empfänger des Datenpakets DP jeweils ermitteln kann, welche Prioritätsklasse PKI dem Datenpaket DP zugeordnet wurde, kann auf verschiedene Arten erfolgen.

Die Kennzeichnung des Datenpakets DP mit der dem Datenpaket DP zugeordneten Prioritätsklasse PKi kann entsprechend des jeweiligen Protokollformats auf unterschiedliche Weise erfolgen.

In Fig. 3b ist für das übliche Protokollformat aus Figur 3a in dem Feld Type eine Prioritätsmarke PM eingetragen. Die Prioritätsmarke PM ist ein eindeutiger Wert, mit dem die Prioritätsklasse PKi eindeutig gekennzeichnet wird. Dieser Wert muß allgemein eindeutig für die entsprechende Prioritätsklasse reserviert werden.

Weiterhin ist es in einer Variante des Verfahrens vorgesehen, Datenpakete DP niedrigster Priorität, also z. B. der ersten Prioritätsklasse PK0 gar nicht zu markieren sondern unverändert gemäß dem üblichen Ethernet-Standard zu verwenden.

Da es möglich ist, daß eine Anordnung mit unterschiedlichen höheren Schichten HL arbeitet, beispielsweise sowohl einerseits mit dem TCP/IP-Protokoll und andererseits auch mit dem SPX/IPX-Protokoll für unterschiedliche Kommunikationsverbindungen, ist es in einer Weiterbildung des Verfahrens vorteilhaft, ein weiteres Feld in dem Datenpaket DP vorzusehen. Das weitere Feld wird als Flußidentikator FID bezeichnet. Der Flußidentikator FID wird in der das Datenpaket DP sendenden Anordnung eindeutig generiert. Somit ist es dem Empfänger des Datenpakets DP möglich, anhand des Datenpakets DP eine eindeutige Zuordnung des Datenpakets DP zu dem Typ der Kommunikationsverbindung, der Prioritätsmarke PM und dem Service-Access-Point, der Kopplung zu den höheren Schichten eindeutig zu ermitteln. Dies ist möglich, da durch die oben beschriebene Vorgehensweise die Kombination der MAC-Senderadresse und des Flußidentikators FID weltweit eindeutig ist und somit in dem Empfänger des Datenpakets DP zur eindeutigen Zuordnung des Datenpakets DP verwendet werden kann.

Da, wie oben beschrieben wurde, bei markierten Datenpaketen DP der ursprüngliche Feldinhalt des Feldes Type beschrieben wird, muß die darin enthaltene Information über das zugehörige Netzwerkprotokoll zuvor separat zum Empfänger, beispielsweise der zweiten Anordnung A2 übertragen werden. Dies erfolgt in einer Signalisierungsphase, die im weiteren näher erläutert wird.

In Fig. 3d ist die Kennzeichnung für das Protokollformat, welches in Fig. 3c beschrieben ist, dargestellt. Dabei ist die Prioritätsmarke PM in dem Feld DSAP enthalten, welches üblicherweise den Empfänger-Dienstzugangspunkt der höheren Schicht HL enthält.

Ferner kann die Prioritätsmarke PM ersatzweise oder zusätzlich auch in einem Feld SSAP enthalten sein, welches üblicherweise den Wert des Dienstzugangspunktes der höheren Schicht HL des Senders des Datenpakets DP enthält.

Das Feld des Flußidentikators FID ist bei dieser Variante ebenso in einer Weiterbildung zusätzlich in dem Datenpaket DP vorgesehen.

Bei dem Format, welches in Fig. 3e dargestellt ist, wird beispielsweise die Prioritätsmarke PM in dem Feld Type übertragen (vgl. Fig. 3f). Ferner ist wiederum ein Feld für den Flußidentikator FID vorgesehen. Diese Möglichkeit, die Prioritätsmarke PM und damit die Angabe der Prioritätsklasse PKi in einer Markierung des Datenpakets DP umzusetzen, stellt lediglich eines von vielen Beispielen dar.

Es ist ebenso in Varianten möglich, neue Felder zur Aufnahme dieser Information vorzusehen.

Werden für unterschiedliche Datenströme verschiedene Dienstzugangspunkte verwendet, so wird die Zuordnung des Datenstroms zu der Prioritätsklasse PKi in eine Tabelle geschrieben und jedem Datenpaket DP, welches dem Datenstrom zugeordnet wird, wird die entsprechende Prioritätsklasse PKi zugeordnet, die in der Tabelle festgelegt wurde.

Ist es jedoch nicht der Fall, daß für jeden Datenstrom ein eigener Zugangspunkt vorgesehen ist, so ist es vorgesehen, daß beispielsweise durch Ermittlung der Identifikationsnummer des Ports des Datenpakets DP, das von einer TCP/IP-Schicht zugeführt wurde, zu ermitteln. Es können aber auch andere Informationen, die den Datenstrom kennzeichnen, dem das Datenpaket DP zugeordnet wird, und schon in höheren Schichten als beispielsweise der TCP/IP-Schicht generiert wurden, ermittelt und ausgewertet werden.

Dies führt beispielsweise dazu, daß für den Fall, daß für das Datenpaket DP der zugehörige Datenstrom identifiziert werden konnte, eine Abbildung auf die entsprechende Prioritätsklasse PKi, die dem Datenpaket DP zugeordnet werden soll, vorgenommen werden kann.

Es ist in einer Weiterbildung des Verfahrens ferner vorgesehen, daß die Abbildung der Qualitätsmerkmale, die für den Datenstrom, also die Kommunikationsverbindung gewährleistet werden sollen, während einer Verbindungsaufbauphase dynamisch konfigurierbar ausgestaltet ist. Wurde für den Datenstrom, dem das Datenpaket DP zugeordnet ist, keine Verbindungsaufbauphase durchgeführt, so wird im einfachsten Fall dem Datenpaket DP entsprechend die erste Prioritätsklasse PK0 zugeordnet.

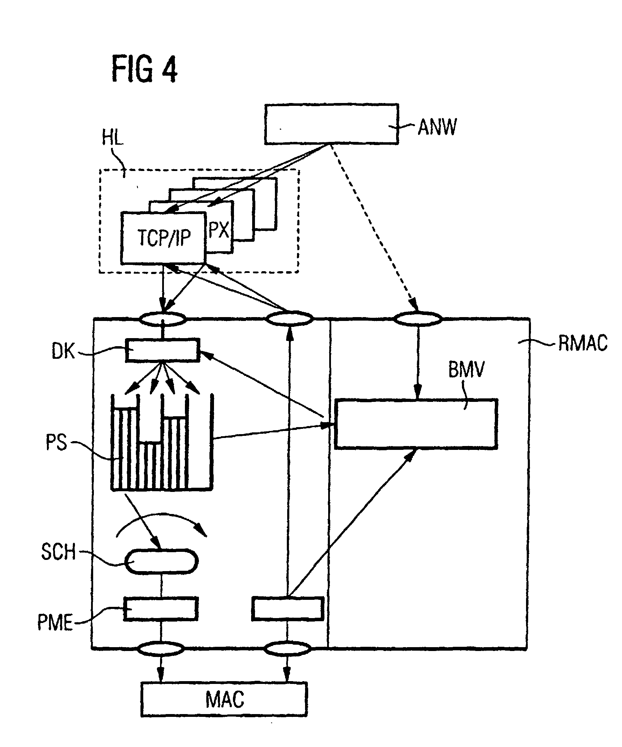

Am folgenden Beispiel wird die Anordnung und das Verfahren weiter verdeutlicht. Eine beliebige Anwendung ANW (vgl. Fig. 4), z. B. ein beliebiges Programm verwendet als Transportprotokoll, das UDP/IP-Protokoll, um Videodaten über das Ethernet zu übertragen.

Ist die Portnummer des zu übertragenden UDP-Datenstroms bekannt, ist es möglich, daß für die Verbindungen Betriebsmittel angefordert werden. Dabei wird für eine im weiteren beschriebenen Signalisierung von einer Betriebsmittelverwaltungseinheit BMV ermittelt, für welche UDP-Portnummer welche Betriebsmittel benötigt werden.

Die Betriebsmittelverwaltungseinheit BMV führt z. B. eine Verbindungsaufbauphase durch und markiert die neue Kommunikationsverbindung eindeutig. Die Markierung wird von der Anordnung erkannt, indem beispielsweise die UDP-Portnummer ausgewertet wird und ausgehend von dieser Portnummer die Kommunikationsverbindung für das Datenpaket DP und die entsprechende Prioritätsklasse PKi ermittelt werden kann.

In Fig. 4 ist die Anordnung, mit der das Verfahren mit einigen Weiterbildungen beispielsweise durchgeführt werden kann, dargestellt.

Die Anordnung, beispielsweise die erste Anordnung A1, die zweite Anordnung A2, sowie die weitere Anordnung AI weist mindestens eine Datenpaket-Klassifizierungseinheit DK, eine Prioritäts-Markierungseinheit PME sowie einen Pufferspeicher PS auf.

Die Anordnung ist logisch zwischen den höheren Schichten HL und der MAC-Schicht angeordnet.

Die Datenpaket-Klassifizierungseinheit DK ist derart ausgestaltet, daß die oben beschriebene Abbildung der Qualitätsmerkmale auf Prioritätsklassen PKi durchgeführt werden kann.

Die Prioritätsmarkierungseinheit PME ist derart ausgestaltet, daß die oben beschriebene Markierung, beispielsweise also das Schreiben von vorgegebenen Werten in bestimmte, vorgebbare Datenfelder des Datenpakets DP, durchgeführt wird.

Das zu übertragende Datenpaket DP wird von den höheren Schichten HL der Anordnung zugeführt. Dort wird es der Datenpaketklassifizierungseinheit DK zugeführt, die Prioritätsklasse PKi für das Datenpaket DP ermittelt und das Datenpaket DP wird in dem Pufferspeicher PS abgespeichert.

In einer Weiterbildung des Verfahrens ist es vorgesehen, den einzelnen Prioritätsklassen PKi separate Teile des Pufferspeichers PS vorgebbarer Größe zuzuordnen. In die separaten Teile, die den Prioritätsklassen PKi zugeordnet werden, werden nur jeweils die Datenpakete DP eingeschrieben, denen die Prioritätsklassen PKi zugeordnet wurde, die dem Teil des Pufferspeichers PS entspricht. Die einzelnen Teile des Pufferspeichers PS sind vorzugsweise nach dem First-In-First-Out Prinzip (FIFO-Pufferspeicher) ausgestaltet. Auf diese Weise ist es einfach möglich, eine sog. Warteschlange für die Datenpakete DP vor der Übertragung der Datenpakete DP zu realisieren.

Durch diese Ausgestaltung der Anordnung wird eine einfache Realisierung des Verfahrens ermöglicht.

Zum Auslesen der Datenpakete DP aus den Teilen des Pufferspeichers PS kann ein beliebiges Scheduling-Verfahren verwendet werden. Eine Übersicht über verschiedene Scheduling-Verfahren ist in dem Dokument [2] zu finden.

Ein sehr einfacher Algorithmus zum Auslesen der Datenpakete DP aus den Teilen des Pufferspeichers PS ist darin zu sehen, daß jeweils, wenn ein Datenpaket DP aus dem Pufferspeicher PS zur Übertragung des Datenpaketes DP ausgelesen werden soll, jeweils der Teil des Pufferspeichers PS, welcher der höchsten Prioritätsklasse, beispielsweise der vierten Prioritätsklasse PK3 entspricht, untersucht und überprüft wird, ob in diesem Teil des Pufferspeichers PS ein Datenpaket DP zur Übertragung ansteht. Ist dies nicht der Fall, so wird sukzessive in fallender Reihenfolge der Prioritäts der nächste Teil des Pufferspeichers PS, der jeweils die nächst niedrigere Prioritätsklasse PKi-1 zugewiesen wird, entsprechend ausgesucht. Zur Durchführung des entsprechenden Scheduling-Verfahrens ist in einer Weiterbildung der Anordnung eine Schedulereinheit SCH vorgesehen.

Ferner ist in einer Weiterbildung der Anordnung die Betriebsmittelverwaltungseinheit BMV vorgesehen.

Die Betriebsmittelverwaltungseinheit BMV ist z. B. derart ausgestaltet, daß mindestens eine der folgenden Funktionen durch die Betriebsmittelverwältungseinheit BMV gewährleistet wird:

- es werden die Betriebsmittel der jeweiligen Anordnung A1, A2, Ai und/oder Betriebsmittel eines zur Übertragung des Datenpakets DP verwendeten Kommunikationsnetzes verwaltet, beispielsweise der Pufferspeicher PS, die Bandbreite des Ethernets, die beispielsweise für eine Kommunikationsverbindung reserviert werden soll, der Scheduler SCH, usw.;

- für das Datenpaket DP wird eine Zugangskontrolle durchgeführt, abhängig von der das Datenpaket DP weiterbearbeitet wird oder nicht;

- es wird eine Signalisierung zwischen der Anordnung und mindestens einer weiteren Anordnung, mit der die Anordnung gekoppelt ist, durchgeführt. Bei dieser Signalisierung werden keine Charakteristika der Kommunikationsverbindung, beispielsweise die reservierte erforderliche Bandbreite, sowie weitere Qualitätsmerkmale für die Kommunikationsverbindung, die für die Kommunikationsverbindung gewährleistet werden, der das jeweilige Datenpaket DP zugeordnet wird, festgelegt.

In einer Weiterbildung der Anordnung ist es vorteilhaft, der Betriebsmittelverwaltungseinheit BMV eine eigene, selbständige Media-Access-Control-Adresse (MAC-Adresse) zuzuordnen. Damit wird es möglich, die Betriebsmittelverwaltungseinheit unabhängig, lediglich physikalisch gekoppelt von der restlichen Anordnung zu realisieren und lediglich über Kopplungen mit der Anordnung zu kommunizieren.

**Signalisierung**

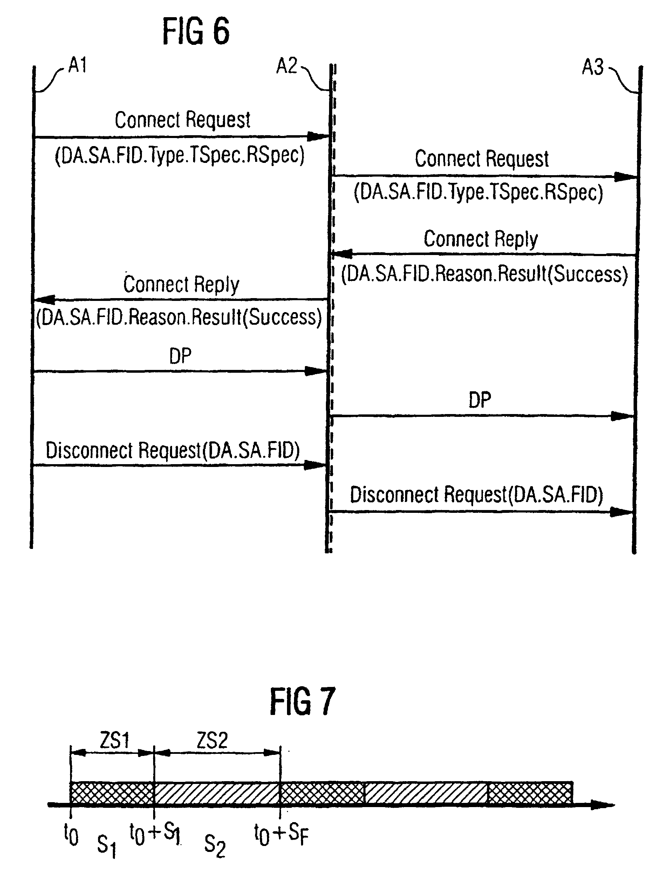

In Fig. 6 ist eine mögliche Signalisierung für die Kommunikationsverbindung, wie sie beispielsweise in Fig. 1 dargestellt ist, beschrieben.

Es wird von der ersten Anordnung A1 eine Verbindungsanforderung (Connect-Request) an die zweite Anordnung A2 gesendet. Der Connect-Request enthält beispielsweise die Zieladresse DA, die Senderadresse SA, die Angabe des Flußidentikators FID, das Feld Type, sowie ein Parameterfeld TSpec, in dem angegeben ist, welche Qualitätsmerkmale für die Kommunikationsverbindung angefordert werden, sowie beispielsweise ein Dienstklassenfeld RSpec, in dem angegeben wird, welche Dienstklasse, beispielsweise welche Prioritätsklasse PKi für die Kommunikationsverbindung angefordert wird.

Von der zweiten Anordnung A2 wird der Connect-Request direkt an die weitere Anordnung Ai weitergeleitet. Bei einer Kommunikationsverbindung, die über mehrere Ethernet-Vermittlungseinheiten geführt wird, ist die zweite Anordnung A2 als eine Menge von Vermittlungseinheiten zu verstehen, die jeweils den Connect-Request und die entsprechenden weiteren Datenpakete DP an dasjenige Endgerät, welches das korrespondierende Endgerät für die Kommunikationsverbindung darstellt, weiterleiten.

Von dem Endgerät, beispielsweise der weiteren Anordnung Ai wird eine Antwort Connect-Reply gesendet, die zusätzlich zu dem Zieladressfeld DA, der Senderadresse SA, den Flußidentifikator FID eine Angabe Result(Success) enthält, in der angegeben ist, ob die angeforderte Kommunikationsverbindung akzeptiert wurde oder nicht.

Ferner ist in einer Ergebnisangabe Reason die Ursache angegeben, warum die Kommunikationsverbindung beispielsweise nicht akzeptiert wurde. Eine Ursache kann beispielsweise in einer zu geringen verfügbaren Bandbreite in dem Kommunikationsnetz liegen. Diese Angaben können in einer vorgebbaren Weise codiert werden und somit enthalten diese Felder lediglich beliebige Zahlenwerte.

Die Antwort Connect-Reply wird an die erste Anordnung A1 über "alle zweite Anordnungen" A2 weitergeleitet. Nach Empfang der Antwort Connect-Reply in der ersten Anordnung A1 und einer positiven Antwort, d. h. einer Antwort in der Weise, daß die Kommunikationsverbindung akzeptiert wurde, ist diese im vorigen beschriebene Verbindungsaufbauphase beendet.

Anschließend erfolgt die eigentliche Übertragung der Nutzdaten, also der Datenpakete DP, denen jeweils entsprechend beispielsweise der ausgehandelten Prioritätsklasse PKi oder auch einer frei vorgebbaren Prioritätsklasse PKi, die von dem Sender festgelegt werden kann, oder auch die jeweils adaptiv, beispielsweise abhängig von der Netzbelastung der jeweiligen Ethernet-Vermittlungsanordnung dem Datenpaket DP zugeordnet werden.

Soll eine Kommunikationsverbindung abgebrochen werden, so wird dies beispielsweise dadurch erreicht, daß von dem Sender, beispielsweise der ersten Anordnung A1 eine Verbindungsabbruchsanforderung Disconnect-Request an die zweite Anordnung A2 gesendet und von der zweiten Anordnung A2 an die weitere Anordnung Ai weitergeleitet wird. Die Verbindungsabbruchsanforderung Disconnect-Request enthält beispielsweise die Zieladresse DA, die Senderadresse SA, sowie den Flußidentifikator FID.

**Realisierung der prioritätsgesteuerten Übertragung auf der Bitübertragungsschicht**

In einer Weiterbildung des Verfahrens ist es vorgesehen, daß die Bandbreite, die beispielsweise in dem Ethernet oder auch für eine Kommunikationsverbindung im Rahmen des Ethernets jeweils zur Verfügung steht, in eine Vielzahl von Bandbreitenbereiche aufgeteilt wird, beispielsweise entsprechend der Anzahl vorgesehener Prioritätsklassen PKi.

Jeder Teil der Bandbreite dient genau zur Übertragung der Datenpakete DP die der Prioritätsklasse PKi zugeordnet sind, denen auch der jeweilige Teil der Bandbreite zugeordnet ist.

Im folgenden wird der ganz einfache Fall dargestellt, bei dem lediglich zwei Prioritätsklassen PK0 und PK1 vorgesehen sind (vgl. Fig. 7).

Für diesen Fall werden beispielsweise zwei Zeitschlitze, ein erster Zeitschlitz ZS1 und ein zweiter Zeitschlitz ZS2 vorgesehen. Der erste Zeitschlitz ZS1 ist beispielsweise für hochpriore Daten, also für Datenpakete DP, denen die zweite Prioritätsklasse PK1 zugeordnet wurde, und der zweite Zeitschlitz ZS2 ist vorgesehen für Datenpakete, denen die niedrige Prioritätsklasse PK0 zugeordnet wurde.

Es ist hierbei in einer Weiterbildung des Verfahrens zur Vereinfachung des Verfahrens vorgesehen, daß lediglich die Größe des ersten Zeitschlitzes ZS1 verwaltet wird. Dies bedeutet, daß es vorteilhaft ist, daß die Zeitschlitze ZS1, ZS2 in ihrer Breite variabel ausgestaltet sind. Ausgehend von einem frei vorgebbaren Referenzzeitpunkt $t_0$ ergibt sich ein Anfangszeitpunkt des zweiten Zeitschlitzes ZS2 aus der Summe des Referenzzeitpunktes $t_0$ und einer Zeitschlitzlänge S1 des ersten Zeitschlitzes ZS1.

Die Zeitschlitzlänge S1 wird so gewählt, daß ein Verkehrsangebot $A_H$ aller hochprioren Datenströme übertragen werden kann. Es gilt:

$$A_H < \frac{S1}{S_F} \cdot B$$

Es wird mit B die Bandbreite des entsprechenden Ethernet-Segmentes bezeichnet. Mit $S_F$ wird die Summe der Zeitschlitzlänge S1 des ersten Zeitschlitzes und einer Zeitschlitzlänge S2 des zweiten Zeitschlitzes ZS2 bezeichnet ($S_F$ = S1 + S2). Die oben beschriebene Vorschrift gibt nur einen groben Anhaltspunkt zur Dimensionierung der ersten Zeitschlitzlänge S1. Eine beliebige Vorschrift zur Dimensionierung, d. h. Aufteilung der einzelnen Zeitschlitzlängen ist dem Fachmann geläufig.

Bestehen Anforderungen an die maximalen Verzögerungen $T_{Dmax}$ der hochprioren zu übertragenden Daten, so ist z. B. folgende Vorschrift zu beachten:

$$S_F < \min T_{Dmax} \text{ (aller hochprioren Kommunikationsverbindungen)}$$

$$+S1$$

Ferner ist in einer Weiterbildung des Verfahrens vorteilhaft, den Referenzzeitpunkt $t_0$ von einer frei vorgebbaren Anordnung beispielsweise über Zeitnachrichten in frei vorgebbaren Zeitintervallen zu synchronisieren, d. h. der Referenzzeitpunkt $t_0$ wird in frei vorgebbaren Zeitintervallen von einer Anordnung an alle anderen Anordnungen gesendet. Die Zeitnachricht wird von den Anordnungen empfangen und als deren neuer Referenzzeitpunkt $t_0$ verwendet. Eine echte Synchronisation der Anordnungen ist im Ethernet nicht möglich. Durch dieses periodische Auffrischen der Referenzzeitpunkte $t_0$ wird jedoch eine ausreichend genaue Kopplung der in den Betriebssystemen der Anordnungen enthaltenen Uhren erreicht.

In diesem Dokument wurden folgende Veröffentlichungen zitiert:

[1] U. O. Pabrai, UNIX Internetworking, Artech House, Boston, London, S. 23, 1993

[2] H. Zhang und D. Ferrari, Rate-Controlled Static-Priority Queuing, Proc. of INFOCOM '93, San Francisco, CA, April 1993

**Patentansprüche**

**1.** Verfahren zur Übertragung eines Datenpakets im Ethernet von einer ersten Anordnung zu mindestens einer zweiten Anordnung,

- bei dem für den Fall, daß ein Pufferspeicher (PS) in einer Vermittlungsanordnung oder mindestens ein Teil des Pufferspeichers (PS) in der Vermittlungsanordnung mit gespeicherten und noch nicht wieder ausgelesenen zu übertragenden Datenpakten (DP) voll beschrieben ist und ein weiteres zu übertragendes Datenpaket (DP) in dem Pufferspeicher (PS) oder mindestens in dem Teil des Pufferspeichers (PS) gespeichert werden soll, eine künstliche Kollision erzeugt wird und dies der das Datenpaket (DP) sendenden Anordnung mitgeteilt wird, und
- bei dem nur in dem Fall eine künstliche Kollision erzeugt wird, wenn das Datenpaket (DP) eine Angabe enthält, daß für die das Datenpaket (DP) sendende Anordnung die Erzeugung einer künstlichen Kollision zulässig ist.

2. Verfahren nach Anspruch 1,

- bei dem dem zu übertragenden Datenpaket eine von mindestens zwei Prioritätsklassen zugeordnet wird (201),
- bei dem das Datenpaket entsprechend der Prioritätsklasse eindeutig gekennzeichnet wird (202), und
- bei dem das Datenpaket unter Berücksichtigung der dem Datenpaket zugeordneten Prioritätsklasse zu der zweiten Anordnung übertragen wird (203).

3. Verfahren nach Anspruch 1 oder 2,

- bei dem das Datenpaket von der zweiten Anordnung empfangen wird (204),
- bei dem die dem Datenpaket zugeordnete Prioritätsklasse ermittelt wird (205), und
- bei dem das Datenpaket unter Berücksichtigung der dem Datenpaket zugeordneten Prioritätsklasse weiter übertragen wird (206).

4. Verfahren nach Anspruch 2 oder 3,

- bei dem in dem Datenpaket enthaltene Information über die Art des Datenpakets und/oder eine Kommunikationsverbindung, der das Datenpaket zugeordnet wird, analysiert wird, und
- bei dem die Zuordnung der Prioritätsklasse unter Berücksichtigung der ermittelten Information erfolgt.

5. Verfahren nach einem der Ansprüche 1 bis 4,
bei dem für das Datenpaket eine Zugangskontrolle durchgeführt wird.

6. Verfahren nach einem der Ansprüche 1 bis 5,
bei dem zwischen den Anordnungen, mit denen das Verfahren durchgeführt wird und die miteinander gekoppelt sind, eine Signalisierung bezüglich einer Kommunikationsverbindung, denen das Datenpaket zugeordnet wird, vor der Übertragung des Datenpakets erfolgt.

7. Verfahren nach einem der Ansprüche 2 bis 6,

- bei dem mindestens jeder Prioritätsklasse mindestens ein Teil eines Pufferspeichers (PS) zugeordnet wird, und
- bei dem das Datenpaket nur in dem Teil des Pufferspeichers (PS) gespeichert wird, der der Prioritätsklasse zugeordnet ist, die auch dem Datenpaket zugeordnet wurde.

8. Verfahren nach Anspruch 7,
bei dem die Anzahl in dem Pufferspeicher (PS) und/oder die Anzahl mindestens in einem Teil des Pufferspeichers (PS) gespeicherten Datenpakten ermittelt wird, wobei der Teil des Pufferspeichers (PS) einer Prioritätsklasse zugeordnet ist und nur ein Datenpaket speichert, welches die entsprechende Prioritätsklasse aufweist, und mit der die in dem Pufferspeicher (PS) gespeicherten Datenpakete in einer vorgebbaren Reihenfolge ausgelesen werden und übertragen werden.

9. Verfahren nach Anspruch 8,
bei dem die Reihenfolge durch die Prioritätsklassen festgelegt ist in der Weise, daß die Datenpakete in der Reihenfolge nach fallender Priorität der Datenpakete ausgelesen werden und übertragen werden.

10. Verfahren nach Anspruch 9,
bei dem die Reihenfolge durch ein vorgebbares Scheduling-Verfahren festgelegt wird.

11. Verfahren nach einem der Ansprüche 1 bis 10,
bei dem für eine Kommunikationsverbindung, welche eine beliebige Anzahl zu übertragender Datenpakete aufweist, zu Beginn der Kommunikationsverbindung vorgebbare Betriebsmittel für die Kommunikationsverbindung reserviert wird.

**12.** Verfahren nach einem der Ansprüche 2 bis 11,

- bei dem von einer Anordnung in vorgebbaren Zeitabständen mindestens eine Zeitnachricht generiert wird und an mindestens einen Teil von mit der Anordnung gekoppelte weitere Anordnungen übertragen wird,
- bei dem die Zeitnachricht eine Synchronisierungsnachricht enthält, abhängig von der Zeitintervalle ermittelt werden, die zur Übertragung von Datenpaketen jeweils einer vorgebbaren Prioritätsklasse vorgesehen sind,
- bei dem die Zeitnachricht von mindestens dem Teil der weiteren Anordnungen empfangen wird,
- bei dem die empfangene Zeitnachricht ausgewertet wird, wobei die Synchronisierungszeit ermittelt wird, abhängig von der die Zeitintervalle ermittelt werden, die zur Übertragung von Datenpaketen jeweils einer vorgebbaren Prioritätsklasse vorgesehen sind.

**13.** Verfahren nach Anspruch 12,
bei dem das Datenpaket nur in dem Zeitintervall übertragen wird, das für die Prioritätsklasse vorgesehen ist, die dem Datenpaket zugeordnet wurde.

## Claims

**1.** Method for transmitting a data packet in the Ethernet from a first arrangement to at least one second arrangement,

- in which, in the event that a buffer (PS) in a switching arrangement or at least a part of the buffer (PS) in the switching arrangement is completely written with stored data packets (DP) to be transmitted which have not yet been read out again, and a further data packet (DP) to be transmitted is to be stored in the buffer (PS) or at least in the part of the buffer (PS), an artificial collision is generated and this is conveyed to the arrangement transmitting the data packet (DP), and
- in which an artificial collision is generated only if the data packet (DP) contains information to the effect that the generation of an artificial collision is permitted for the arrangement transmitting the data packet (DP).

**2.** Method according to Claim 1,

- in which the data packet to be transmitted is assigned one of at least two priority classes (201),
- in which the data packet is unambiguously marked according to the priority class (202), and
- in which the data packet is transmitted to the second arrangement (203) taking into account the priority class assigned to the data packet.

**3.** Method according to Claim 1 or 2, in which the data packet is received (204) by the second arrangement,

- in which the priority class assigned to the data packet is determined (205), and
- in which the data packet is transmitted on (206) taking into account the priority class assigned to the data packet.

**4.** Method according to Claim 2 or 3,

- in which information contained in the data packet relating to the type of the data packet and/or a communications connection to which the data packet is assigned is analysed and
- in which the assignment of the priority class is made taking into account the information which is determined.

**5.** Method according to one of Claims 1 to 4,
in which an access check is carried out for the data packet.

**6.** Method according to one of Claims 1 to 5,
in which signaling relating to a communications connection to which the data packet is assigned is carried out between the arrangements with which the method is carried out and which are connected to one another, before the transmission of the data packet takes place.

**7.** Method according to one of Claims 2 to 6,

- in which at least each priority class is assigned at least a part of a buffer (PS), and

- in which the data packet is stored only in the part of the buffer (PS) which is assigned to the priority class which was also assigned to the data packet.

8. Method according to Claim 7,
   in which the number of stored data packets in the buffer (PS) and/or the number of stored data packets at least in a part of the buffer (PS) is determined, the part of the buffer (PS) being assigned to a priority class, and only a data packet which has the corresponding priority class with which the data packets stored in the buffer (PS) are output and transmitted in a predefinable sequence being stored.

9. Method according to Claim 8,
   in which the sequence is defined by the priority classes in such a way that the data packets in the sequence are output and transmitted according to decreasing priority of the data packets.

10. Method according to claim 9,
    in which the sequence is defined by a predefinable scheduling method.

11. Method according to one of Claims 1 to 10, in which, for a communications connection which has any desired number of data packets to be transmitted, resources which can be prescribed for the communications connection at the start of the communications connection are reserved.

12. Method according to one of Claims 2 to 11,

    - in which at least one timing message is generated by an arrangement at predefinable time intervals and is transmitted to at least one part of further arrangements which are coupled to the arrangement,
    - in which the timing message contains a synchronization message, as a function of which timing intervals are determined which are provided for transmitting data packets each with a predefinable priority class,
    - in which the timing message is received by at least some of the further arrangements,
    - in which the received timing message is evaluated, a synchronization time being determined, as a function of which the timing intervals which are provided for the transmission of data packets each having a predefinable priority class, are determined.

13. Method according to Claim 12, in which the data packet is transmitted only in the time interval which is provided for the priority class which has been assigned to the data packet.

**Revendications**

1. Procédé destiné à la transmission sur Ethernet d'un paquet de données d'une première structure à au moins une deuxième structure,

   - dans lequel, pour le cas où une mémoire tampon (PS) dans une structure de commutation ou au moins une partie de la mémoire tampon (PS) dans la structure de commutation est entièrement occupée par des paquets de données (DP) à transmettre, qui ont été mémorisés et pas encore lus, et où un autre paquet de données (DP) à transmettre doit être mémorisé dans la mémoire tampon (PS) ou au moins dans la partie de la mémoire tampon (PS), une collision virtuelle est générée et ceci est communiqué à la structure qui émet le paquet de données (DP) et
   - dans lequel une collision virtuelle n'est générée que dans le cas où le paquet de données (DP) renferme une information selon laquelle, pour la structure qui émet le paquet de données (DP), la génération d'une collision virtuelle est admissible.

2. Procédé selon la revendication 1

   - dans lequel une classe de priorité parmi au moins deux classes de priorité est attribuée au paquet de données à transmettre (201),
   - dans lequel le paquet de données est caractérisé d'une façon univoque en fonction de la classe de priorité (202) et
   - dans lequel le paquet de données, en tenant compte de la classe de priorité attribuée au paquet de données, est transmis à la deuxième structure (203).

3.  Procédé selon la revendication 1 ou 2

    -   dans lequel le paquet de données est reçu par la deuxième structure (204),
    -   dans lequel la classe de priorité attribuée au paquet de données est déterminée (205) et
    -   dans lequel le paquet de données, en tenant compte de la classe de priorité attribuée au paquet de données, est retransmis (206).

4.  Procédé selon la revendication 2 ou 3

    -   dans lequel l'information contenue dans le paquet de données relative au genre du paquet de données et/ou à une liaison de communication, à laquelle le paquet de données est affecté, est analysée et
    -   dans lequel l'attribution de la classe de priorité a lieu en tenant compte de l'information constatée.

5.  Procédé selon l'une des revendications 1 à 4
    dans lequel on exécute un contrôle d'accès pour le paquet de données.

6.  Procédé selon l'une des revendications 1 à 5
    dans lequel il se produit, avant la transmission du paquet de données, entre les structures avec lesquelles le procédé est exécuté et qui sont couplées les unes aux autres, une signalisation relative à une liaison de communication à laquelle le paquet de données est affecté.

7.  Procédé selon l'une des revendications 2 à 6

    -   dans lequel au moins une partie de la mémoire tampon (PS) est affectée à au moins chaque classe de priorité et
    -   dans lequel le paquet de données est mémorisé seulement dans la partie de la mémoire tampon (PS) affectée à la classe de priorité qui est également attribuée au paquet de données.

8.  Procédé selon la revendication 7
    dans lequel on détermine le nombre des paquets de données mémorisés dans la mémoire tampon (PS) et/ou le nombre des paquets de données mémorisés dans au moins une partie de la mémoire tampon (PS), la partie de la mémoire tampon (PS) étant affectée à une classe de priorité et ne mémorisant qu'un paquet de données qui a la classe de priorité correspondante, avec laquelle les paquets de données mémorisés dans la mémoire tampon (PS) sont lus et transmis dans un ordre qui peut être fixé au préalable.

9.  Procédé selon la revendication 8
    dans lequel l'ordre est fixé par les classes de priorité de telle manière que les paquets de données sont lus et transmis dans un ordre de priorité décroissante des paquets de données.

10. Procédé selon la revendication 9
    dans lequel l'ordre est fixé par une méthode de classification qui peut être fixée au préalable.

11. Procédé selon l'une des revendications 1 à 10
    dans lequel, pour une liaison de communication, qui comporte un nombre quelconque de paquets de données à transmettre, on réserve, au début de la liaison de communication, des ressources, qui peuvent être fixées au préalable, pour la liaison de communication.

12. Procédé selon l'une des revendications 2 à 11

    -   dans lequel une structure génère, à des intervalles qui peuvent être fixés au préalable, au moins un message temporel et l'envoie à au moins une partie des autres structures couplées avec la structure,
    -   dans lequel le message temporel renferme un message de synchronisation en fonction duquel sont déterminés des intervalles de temps, lesquels sont prévus pour la transmission de paquets de données, dans chaque cas, d'une classe de priorité, qui peut être fixée au préalable,
    -   dans lequel le message temporel est reçu par au moins une partie des autres structures,
    -   dans lequel le message temporel reçu est analysé, ce qui permet de déterminer le temps de synchronisation en fonction duquel sont déterminés les intervalles de temps qui sont prévus pour la transmission de paquets de données ayant, dans chaque cas, une classe de priorité, qui peut être fixée au préalable.

13. Procédé selon la revendication 12
    dans lequel le paquet de données n'est transmis que dans l'intervalle de temps qui est prévu pour la classe de priorité affectée au paquet de données.

## FIG 1

HL — A1

| higher Layers |
| RMAC |
| MAC |
| Phy |

K1
DP

— A2

| RMAC |
| MAC |
| Phy |

K2
DP

HL — Ai

| higher Layers |
| RMAC |
| MAC |
| Phy |

## FIG 2

| Zuordnung einer Prioritätsklasse zu Datenpaket |—201

↓

| Kennzeichnung des Datenpakets |—202

↓

| Übertragung des Datenpakets von erster Anordnung zu zweiter Anordnung |—203

↓

| Empfang des Datenpakets in zweiter Anordnung |—204

↓

| Ermittlung der Prioritätsklasse für das Datenpaket |—205

↓

| Übertragen des Datenpakets |—206

FIG 3A

DA | SA | Type | Info | FCS ⟩ DP

FIG 3B

DA | SA | PM | FID | Info | FCS ⟩ DP

FIG 3C

DA | SA | Len | DSAP | SSAP | Contr. | Info | FCS ⟩ DP

FIG 3D

DA | SA | Len | PM | PM | Contr. | FID | Info | FCS ⟩ DP

FIG 3E

DA | SA | Len | OA | OA | 03 | 000 | Type | Info | FCS ⟩ DP

FIG 3F

DA | SA | Len | OA | OA | 03 | 000 | PM | FID | Info | FCS ⟩ DP

EP 0 885 505 B1

FIG 4

EP 0 885 505 B1

FIG 5A

| DA | SA | Type | Info |
|----|----|------|------|

DP

FIG 5B

| DA | SA | BPStat | FID | Info |
|----|----|--------|-----|------|

DP

FIG 5C

| DA | SA | Len | DSAP | SSAP | Contr. | Info |
|----|----|-----|------|------|--------|------|

DP

FIG 5D

| DA | SA | BPStat DSAP | BPStat SSAP | PM | Contr. | FID | Info |
|----|----|-------------|-------------|-----|--------|-----|------|

DP

FIG 5E

| DA | SA | Len | OA | OA | 03 | 000 | Type | Info |
|----|----|-----|----|----|----|-----|------|------|

DP

FIG 5F

| DA | SA | Len | OA | OA | 03 | 000 | BPStat | FID | Info |
|----|----|-----|----|----|----|-----|--------|-----|------|

DP

## FIG 6

A1

A2

A3

Connect Request

(DA.SA.FID.Type.TSpec.RSpec)

Connect Request

(DA.SA.FID.Type.TSpec.RSpec)

Connect Reply

(DA.SA.FID.Reason.Result(Success)

Connect Reply

(DA.SA.FID.Reason.Result(Success)

DP

DP

Disconnect Request(DA.SA.FID)

Disconnect Request(DA.SA.FID)

## FIG 7

ZS1   ZS2

$t_0$   $S_1$   $t_0+S_1$   $S_2$   $t_0+S_F$